# EUROPEAN PATENT APPLICATION

(11) **EP 4 586 203 A1**
(43) Date of publication of application: **16.07.2025**
(21) Application number: 24151433.0
(22) Date of filing: 11.01.2024
(51) Int. Cl.: G06T 15/20, G06T 17/00

(54) **SPATIAL MANAGEMENT OF OBJECTS USING HIERARCHICAL STRUCTURES**

(71) Applicant: Cloud Imperium Rights Ltd., Manchester M3 3BG (GB)
(72) Inventor: BOLTE, Christopher, 60488 Frankfurt am Main (DE)
(74) Representative: Valvoda, Jakob

(57) **Abstract**

The present disclosure refers to a method for spatial management of objects. The method comprises providing a hierarchical tree structure with a root node and a plurality of nodes on a plurality of depth levels, wherein a node represents a cell of a spatial subdivision of the multi-dimensional space, encoding coordinates of an object in a multi-dimensional space into a code, the code including a sequence of successive sections, each section including interleaved one or more successive bits of the coordinates from each dimension of the multi-dimensional space, associating the object with a node of the plurality of nodes based on the code, wherein objects located within a cell of the spatial subdivision share a common node at a corresponding depth level in the hierarchical tree structure, and storing the object in an object array of the associated node in the memory. Furthermore, a device and a system are described.

## Description

### TECHNICAL FIELD

The present invention relates to a method for spatial management of objects. Furthermore, a device and a networked system are defined. In particular, the present disclosure relates to spatial management of objects using hierarchical structures. More specifically, the disclosure may pertains to a spatial data structure, which may be used for spatial culling, rendering, and data management in multi-dimensional environments.

### BACKGROUND

Various technical application areas may require spatial management of object. In computer graphics, for example, especially in video games, virtual reality, and 3D modeling, managing and rendering of vast amounts of spatial data may represent a significant challenge. Traditional data structures such as quad-trees, octrees, and binary space partitioning trees have been commonly used for spatial partitioning. However, these structures often face limitations in terms of memory efficiency and computational overhead, especially when handling large, dynamic 3D environments.

Spatial management of objects in computer science, particularly in fields like computer graphics, geographical information systems (GIS), and computer-aided design (CAD), involves organizing, storing, and querying data based on its spatial characteristics. Structures like quad-trees, octrees, R-trees, and BSP (Binary Space Partitioning) trees can be used. These data structures divide space into hierarchical subdivisions, enabling queries based on spatial location of objects. Furthermore, uniform or non-uniform grids can be used for spatial partitioning, especially in simulations and game development. Furthermore, bounding volume hierarchies (BVH) can be used in collision detection and ray tracing. BVHs group objects into bounding volumes (like boxes or spheres) that encapsulate one or more objects.

Existing spatial data structures can struggle with handling of dynamic objects in large-scale environments. This limitation leads to challenges in frustum culling, level of detail management, and occlusion culling, which can be critical for dynamic and real-time applications, such as real-time simulation or rendering.

### SUMMARY

The objective of the present invention is to provide a method for spatial management of objects, a respective system and device, which overcome one or more of the above-mentioned problems of the prior art.

The invention is defined by a method, a device, and a system according to the independent claims. Preferred embodiments are disclosed in the dependent claims.

The present disclosure addresses the above-mentioned challenges by introducing an encoding and management scheme for spatial data management. A hierarchical structure is specifically designed to optimize memory usage and computational efficiency, making it particularly suitable for real-time applications in computer-based physics simulation, computer graphics and spatial data processing.

A first aspect of the invention provides a method for spatial management of obj ects. The method comprises providing, in a memory, a hierarchical tree structure with a root node and a plurality of nodes on a plurality of depth levels, wherein a node represents a cell of a spatial subdivision of the multi-dimensional space, encoding, by an encoder, coordinates of an object in a multi-dimensional space into a code, the code including a sequence of successive sections, each section including interleaved one or more successive bits of the coordinates from each dimension of the multi-dimensional space, associating, by a processing unit, the object with a node of the plurality of nodes based on the code, wherein objects located within a cell of the spatial subdivision share a common node at a corresponding depth level in the hierarchical tree structure, and storing the object in an object array of the associated node in the memory.

The method may be a computer-implemented method. The method may be implemented in a computing device or on a system with one or more computing devices, including one or more processors or processing units (PUs) that may be coupled to each other or communicate with each other, and that may be configured to perform individual method steps. The one or more processors or PUs may implement hardware and/or software modules that execute the individual method steps. Examples may include a providing PU or provider; an encoding PU or encoder; and/or an associating PU or mapper/associator that may perform one or more steps of the method according to the first aspect or implementations of the first aspect.

The approach provides for efficient spatial partitioning. The hierarchical tree structure enables an optimal balance between a depth of the hierarchical tree structure and a number of nodes, ensuring minimal memory consumption while maintaining efficient spatial querying capabilities. The hierarchical tree structure can efficiently handle objects of various size and properties, including small or large objects that span multiple partitions, ensuring accurate and efficient culling and rendering. Encoding of the coordinates into codes further enables an advanced hardware utilization, for example, by integrating modern CPU instructions, such as pop count operations. This maximizes computational efficiency, making the approach well-suited for contemporary hardware architectures. The hierarchical tree structure is scalable and adaptable to a wide range of technical applications, from physics simulation, rendering, and spatial management of simple 3D scenes to complex, dynamic environments.

The method involves maintaining the hierarchical tree structure in memory, with a root node and multiple nodes at various depth levels. Each node may represent a cell of a spatial subdivision. Objects located within a cell of the spatial subdivision share a common node at a corresponding depth level in the hierarchical tree structure. The common node may be the node representing the respective cell of the spatial subdivision (or a parent node), which may enclose the objects at the respective depth level. This allows for efficient spatial organization and querying, as objects are sorted into discrete spatial regions represented by the nodes. The coordinates of each object are encoded into the specific code. The code comprises successive sections with interleaved bits from each dimension of the space. This transforms multi-dimensional coordinates into a one-dimensional value while preserving spatial locality. Such encoding is beneficial for efficient storage and retrieval. The processing unit may associate each object with a node based on its encoded coordinates. The method may retrieve any spatial characteristics of the objects, such as size. Objects sharing a common cell (or region) in the spatial subdivision are grouped under the common node at the appropriate depth level. This represents a logical and spatial organization of objects, optimizing queries like range searches or nearest neighbor searches.

The object (and any further one or more objects represented by the hierarchical tree structure) is stored in the object array within the associated node. This allows for efficient storage and direct access to the objects within each spatial subdivision. The use of an array focuses on memory efficiency and access speed, as arrays allow for contiguous memory storage and quick indexing, which further exploits the spatial code of the object.

The method combines efficient spatial partitioning with a specific encoding scheme for object coordinates. The approach is particularly well-suited for applications in physics simulations, computer graphics, geographic information systems (GIS), and other areas where efficient spatial querying and organization are critical. The method is designed for performance optimization, both in terms of computational efficiency and memory usage.

In a first implementation of the method according to the first aspect, the method further comprises culling nodes of the hierarchical tree structure using a culling check during traversal of the hierarchical tree structure, and querying objects associated with nodes that passed the culling check. Culling may refer to the selective exclusion of certain nodes from further processing based on specific criteria or conditions. This process is carried out using a culling check, which may represent a set of conditions or tests applied to each node as the hierarchical tree structure is traversed. The nature of the culling checks can vary but generally may involve determining whether contents of a node are relevant or necessary for the current operation, such as rendering or querying. Criteria used in the culling check could include factors, like the node's location relative to a viewing frustum in 3D rendering (frustum culling), occlusion information (occlusion culling), or level of detail requirements. The objective may be to identify nodes whose associated objects do not need to be processed in the current context, thereby saving computational resources. After the culling check, objects associated with the nodes that passed (i.e., were not culled) are queried or processed further. This implies that only the objects in nodes that passed the culling check are considered relevant for the current operation. The step may be crucial for efficiency, especially in real-time applications like video games or simulations, where processing power and memory bandwidth are valuable resources. This may add a significant enhancement to the spatial management method by introducing an efficient culling mechanism. The mechanism optimizes the overall process by reducing the computational load and focusing on the most pertinent data, which is particularly valuable in performance-critical applications involving large, complex spatial data sets.

In a further implementation of the method according to the first aspect, the method further comprises processing a scene in the multi-dimensional space, including determining a view frustum, traversing the hierarchical tree structure to identify nodes that intersect with the view frustum, and processing objects associated with the identified nodes. Preferably, this may include ignoring objects in nodes outside of the view frustum. Processing of scenes may be useful in various applications, such as simulation applications or computer graphics applications including rendering of scenes. The view frustum may be a geometric shape, typically a truncated pyramid in 3D space, representing a volume of space for processing. The view frustum may be defined by a camera. Accordingly, the view frustum may be a view frustum of the camera. The view frustum volume may be, for example, visible through the camera. It may define the area of the scene that needs to be processed, such as rendered or simulated and the like. Calculating the view frustum and identifying nodes withing the view frustum may be essential for deciding which parts of the scene are potentially visible to the camera. The hierarchical tree structure may be traversed to identify which nodes intersect with the view frustum. The traversal may be guided by the spatial properties of the nodes, which may include the size and location of the corresponding spatial subdivision. Only nodes that have a spatial intersection with the view frustum are considered for further processing. This may optimize processing or rendering performance, as it filters out large portions of the scene that are outside the view frustum and, therefore, likely do not contribute to the processing of the corresponding scene. After identifying the relevant nodes, the method involves processing the objects associated with these nodes. Processing in this context may typically include operations necessary for rendering, such as computing geometry, applying textures, lighting calculations, and potentially level-of-detail adjustments, or for simulation, such as physics simulation performed on the group of objects within the view frustum. By integrating the spatial management method with selective processing, efficiency of processing or rendering of complex scenes in real-time applications may be improved. It further reduces the computational load and memory usage by focusing only on the visible parts of the scene. This may be particularly advantageous in applications like video games, virtual reality, and simulations, where real-time processing and rendering performance may be crucial.

In a further implementation of the method according to the first aspect, the method further comprises using the hierarchical tree structure to determine a level of detail for objects in the respective nodes of the hierarchical tree structure based on a spatial relationship to a viewer. This integrates Level of Detail (LOD) management based on the viewer's spatial relationship to objects within the hierarchical tree structure with spatial management of objects. Further to spatial organization, the hierarchical tree structure may be utilized for determining an appropriate level of detail for objects within each node. LOD is a technique used in 3D graphics to manage the complexity of rendered objects based on their distance from a viewer. Closer objects may be processed with higher detail, while distant objects may be processed with less detail to save on computational resources. By leveraging the spatial organization of the hierarchical tree structure, the LOD for each object can be determined more efficiently. The hierarchical tree structure can be used to retrieve or determine spatial properties or the spatial relationship with the viewer. The spatial relationship may include the viewer's position and orientation in the multi-dimensional space. This may further take into consideration a dynamic adaptation of LOD based on the viewer's movement and changes in viewpoint. As the viewer moves through the space, the LOD for various objects may adjust accordingly.

In a further implementation of the method according to the first aspect, the method further comprises determining an occlusion level of objects by traversing the hierarchical tree structure, and processing the objects according to the occlusion level. The occlusion level of objects may be determined through a traversal of the hierarchical tree structure. Subsequently, objects can be processing by taking into consideration the occlusion level. This may include omitting the objects at all if they are, for example, occluded. Occlusion in a 3D scene may refer to the phenomenon where certain objects are blocked from view by other objects, thus rendering them invisible or partially invisible to the viewer or camera. This may include evaluating the spatial relationships between objects to ascertain which objects are occluding others. The hierarchical nature of the hierarchical tree structure aids in this process by allowing for an efficient determination of occlusion based on the spatial organization of the objects. Once the occlusion level of each object is determined, the objects are processed accordingly. This could involve decisions such as not processing occluded objects at all or processing them with different levels of detail. Processing objects based on occlusion level represents a significant optimization technique for processing of objects in multi-dimensional environments. It reduces the processing load by avoiding unnecessary processing of objects that are not visible in the final scene. By not spending resources on fully or partially occluded objects, the system can allocate more resources to processing of fully or partially visible parts of the multi-dimensional scene. Furthermore, in dynamic environments where objects and viewer positions may change, this enables real-time updates to occlusion levels as the scene evolves. The hierarchical tree structure facilitates quick updates and recalculations of occlusion as objects move or the viewer's perspective changes.

In a further implementation of the method according to the first aspect, each node stores references to child nodes in a node array in the memory and/or references to objects in the object array in the memory. The use of an array for storing child nodes (or respective references) may enable a structured and fixed-size approach with a specific number of child nodes per parent node, wherein each may refer to a respective subdivision. Having separate arrays for child nodes and objects allows for efficient traversal and querying of the hierarchical tree structure. For instance, when performing spatial queries or rendering operations, the hierarchical tree structure can be traversed node-by-node, with quick access to both the relevant spatial subdivisions (via child nodes) and the objects included within those subdivisions. The hierarchical tree structure may be suitable for both depth-first and breadth-first traversal strategies, depending on the requirements of the specific operation, e.g., physics simulation, rendering, collision detection, spatial querying, and the like, in any combination. By storing references in arrays, the hierarchical tree structure aims to optimize both memory usage and access speed. The organization of the arrays within memory can also impact performance, especially in terms of cache efficiency and memory bandwidth utilization. Moreover, entries in the arrays may be efficiently accessed using respective section in the code of the objects that may be advantageously exploited by dedicated instructions in CPU or GPU instruction sets.

In a further implementation of the method according to the first aspect, the method further comprises optimizing (by the processing unit) the hierarchical tree structure, including, for each node, determining a number of objects associated with the respective node, and removing nodes without associated objects. This introduces an optimization step. The optimization may involve evaluating each node for the number of associated objects and removing nodes that do not have any associated objects. The process may begin with determining the number of objects associated with each node in the hierarchical tree structure. This may involve querying the object array of each node and/or counting or assessing the objects referenced or stored in each node's object array. Keeping track of the object count per node may be important for determining a distribution of objects across the hierarchical tree structure (or across the multi-dimensional space) and identifying nodes that are underutilized or empty. Empty nodes may not contribute to the tree's purpose of spatially organizing objects. Thus, removing empty nodes can significantly improve the efficiency of the tree. It reduces memory usage by eliminating unnecessary node structures and optimizes traversal operations by reducing the number of nodes to traverse. This optimization may be particularly important in applications where the spatial distribution of objects changes over time, such as in simulations, games, or real-time tracking systems. It ensures that the spatial data structure remains as efficient as possible, adapting to changes in the spatial distribution of objects.

In a further implementation of the method according to the first aspect, the method further comprises collapsing nodes with a single child node. Collapsing nodes represents a further optimization technique for the hierarchical tree structure, which simplifies the tree structure and enhances traversal efficiency. The method may entail identifying nodes within the hierarchical tree structure that have only one child node, which are then collapsed. Collapsing in this context means that the single-child node effectively takes the place of its parent node. This may reduce the depth of the hierarchical tree structure in certain branches, effectively eliminating unnecessary intermediate nodes that do not contribute to further spatial subdivision. By collapsing nodes with only one child, the hierarchical tree structure may become more compact and/or streamlined, allowing for direct traversal to the child node. This may bypass the need to traverse through the parent node, thus reducing the number of steps required in tree traversal operations. Structurally, collapsing results in a more compact tree with fewer redundant nodes. Computationally, it reduces the traversal time, as fewer nodes need to be processed. This may be particularly beneficial in scenarios where the hierarchical tree structure needs to be traversed frequently or in real-time applications where performance is critical.

In dynamic environments, where the spatial distribution of objects can change, collapsing may allow for adaptive optimization of the tree structure. As objects are added, moved, or removed, the hierarchical tree structure can be restructured to maintain its efficiency. The process of collapsing nodes with a single child can be part of an ongoing optimization routine that keeps the tree structure as efficient as possible. Collapsing may enhance the capability to manage spatial data effectively, particularly in complex multi-dimensional environments. It ensures that the tree remains optimized for quick access and efficient management of the spatial data.

In a further implementation of the method according to the first aspect, said associating, by a processing unit, the object with a node of the plurality of nodes includes traversing the hierarchical tree structure starting with the root node to identify the node associated with the object based on the code. Objects are associated with nodes in the tree in that the hierarchical tree structure is traversed to determine the appropriate node for each object based on its encoded spatial coordinates. The processing unit (which could be a CPU, GPU, or another dedicated computational unit) may associate each object with a specific node in the tree based on the spatial code of the object, which encodes its position in the multi-dimensional space. The spatial code may translate the multi-dimensional coordinates of the object into a single-dimensional value while preserving spatial locality. Said associating may start with the traversal of the hierarchical tree structure beginning at the root node. The root node may represent the highest level of spatial subdivision, encompassing the entire (multi-dimensional) space managed by the hierarchical tree structure. The traversal may then proceed down the tree, moving from each node to its children, guided by the spatial code of the object. At each step, the method may determine which child node's spatial region encompasses the object, based on a next section of the spatial code that corresponds to the depth of the respective node or child nodes. The traversal may continue until the node corresponding to the code of the object is identified. This node may be where the object's spatial location falls within the node's spatial subdivision. This may further include a consideration of a size or other spatial characteristics of the object. Hence, the depth of the traversal and the specific path taken may depend on one or more of the object's location, the object's size, the object's spatial characteristics, and/or the tree's structure, in any combination. The process ensures that each object is placed in the most appropriate node that corresponds to its spatial characteristics.

The process of associating nodes to objects (and vice versa) by traversing the hierarchical tree structure allows for a highly efficient and precise organization of spatial data. It ensures that each object is stored in the node that best represents its location in space and further spatial characteristics, thereby facilitating efficient spatial queries and operations. Efficiency considerations could particularly play a role in applications where rapid access to spatial data is necessary, such as in real-time rendering, simulations, or spatial analysis.

In a further implementation of the method according to the first aspect, the method further comprises, for each node, checking child nodes of the respective node according to a section of the code corresponding to the depth level of the child nodes to identify a node associated with the object based on the code. Said associating objects with nodes, specifically how the traversal of the tree structure is guided by the encoded spatial information of objects and the depth level of the nodes, may involve checking child nodes of the respective node to determine where an object should be placed. The checking may be guided by a specific section of the object's code, which corresponds to the depth level of the child nodes. The code representing the object's spatial information may be structured in such a way that different sections of the code are relevant at different levels of the tree. As the tree is traversed from the root to deeper levels, successive sections of the code are used to guide the traversal and select the appropriate child node. The traversal process may be inherently depth-dependent. At each level of the tree, the corresponding section of the object's code may be considered to determine which child node's spatial region encompasses the object. This method ensures that as the traversal moves deeper into the hierarchical tree structure, the spatial resolution becomes finer, and the specific location of the object within the tree's spatial subdivision is determined with increasing precision. The node identified at the end of this traversal is the one whose spatial subdivision aligns with at least one of the object's location, size and/or spatial characteristics, in any combination. By structuring the traversal process around the depth-specific sections of the object's code, the method provides an efficient way to navigate the hierarchical tree structure and place objects accurately. This approach reduces unnecessary checks of irrelevant nodes, thereby optimizing the association process. The process is particularly advantageous in complex spatial environments where efficient data management is essential, such as in 3D rendering, geographic information systems, simulations, and spatial analytics.

In a further implementation of the method according to the first aspect, the method further comprises if the node array of the respective node does not include a child node at a position corresponding to the section of the code, inserting a new node in the node array. New nodes can be inserted into the tree when required, based on the spatial coding of objects. If, during the traversal of the tree to associate an object with a node, it is found that the current node's array of child nodes does not include a child node at a position corresponding to a specific section of the object's code, and if the child node is required to accommodate the object, then a new node can be inserted at that position in the node array of the current node. This condition(s) may be based on the spatial code of the object, which dictates its position within the multi-dimensional space, and/or further spatial characteristics of the objects, such as the size of the object. The section of the code may refer to the part of the object's spatial code corresponding to the current depth level in the tree. This approach allows for a dynamic expansion of the hierarchical tree structure. As new objects with unique spatial codes are introduced, the hierarchical tree structure may adapt by creating new nodes where necessary to accommodate these objects. The insertion of new nodes based on the absence of an appropriate child node ensures that the tree remains comprehensive and accurately represents the spatial distribution of all objects.

The new node may be inserted in the node array at a position that corresponds directly to the section of the object's code. This may ensure that the spatial properties of the object are accurately represented within the tree's structure. This precise alignment between the object's spatial code and the tree's structure may ensure that the integrity of the spatial data organization is maintained. By only adding nodes when necessary (i.e., when the current structure does not already accommodate a new object's spatial code), the method maintains an efficient and lean tree structure. This process may be relevant for applications where space is dynamically partitioned, and objects are continually or dynamically added, moved, or removed, such as in real-time simulations, geographic information systems, and dynamic 3D rendering environments.

In a further implementation of the method according to the first aspect, the method further comprises adding a further object into the hierarchical tree structure, including encoding coordinates of the further object to create a further code, associating (by the processing unit) the further object with a node of the plurality of nodes based on the further code, and storing the further object in an object array of the associated further node in the memory. This may enable an iterative (or parallel) adding of further or new objects. The first step may involve encoding the coordinates of the new (or further) object to create a new (or further) code. The encoding likely transforms the object's multi-dimensional spatial coordinates into a format compatible with the hierarchical tree structure. Next, the processing unit may associate the newly encoded object with one of the nodes in the hierarchical tree structure. This association is based on the object's encoded spatial information (the further code). The process may involve traversing the tree, starting from the root and moving through the hierarchy, to find the node whose spatial region (or cell of subdivision) corresponds to the object's location as indicated by its code. Furthermore, the size of the object or other spatial characteristics can be used when searching for the node. Once the appropriate node is identified, the new (or further) object is stored in the appropriate node's object array. The object array holds references to all objects that are located within the node's spatial subdivision.

In a further implementation of the method according to the first aspect, the method further comprises deleting an object from an object array of an associated node, and de-associating the object with the associated node. Removing of objects maintains the accuracy and efficiency of the tree, especially in dynamic environments where objects can change, move, or be removed. The first step in the process may be to delete the specified object from the object array of the node it is associated with. Each node in the tree has an object array that stores the objects, references or pointers to the objects within its spatial subdivision. Deleting may involve identifying the associated node, locating the object within the node's object array and removing it. Following the removal of the object from the object array, the next step may be to de-associate the object from the node. This means that the object is no longer considered part of the spatial subdivision represented by that node. De-association may be essential for maintaining the integrity of the tree's structure. It ensures that the tree accurately reflects the current spatial arrangement of objects, especially after an object has been removed or relocated. Removing or deleting objects can also lead to further optimization steps, such as collapsing nodes that become empty or redundant after the deletion, as outlined in other implementations of the first aspect. In dynamic systems, deleting or de-associating of objects could be triggered by an update of a position or other spatial configuration of objects. The de-associated object could be re-encoded and associated with another appropriate node of the hierarchical tree structure.

In a further implementation of the method according to the first aspect, the method further comprises receiving an update of properties of an object stored in an object array of a node of the hierarchical tree structure, and based on the updated properties, dynamically associating the object with another node of the hierarchical tree structure. This may involve receiving the updates regarding the properties of an object already stored in the tree. These properties could include spatial attributes like location, size, or other relevant characteristics that determine the object's position (and expansion) in the multi-dimensional space. The ability to update object properties may be crucial in dynamic environments where objects can move, change size, or undergo other transformations that affect their spatial characteristics. Once the properties of the object are updated, the object can be dynamically re-associated with a different node in the tree structure, if necessary. This re-association may be based on the object's new properties and an updated code of the object. The dynamic nature of this implementation may allow the hierarchical tree structure to adapt to changes in the spatial environment. If an object's updated properties place the object in a different spatial subdivision or subdivisions, it needs to be moved to the node that accurately represents this new location and encompasses the object. As objects change, the hierarchical tree structure may reflect these changes to ensure that spatial queries and operations remain accurate and efficient.

Handling updates in object properties and dynamically re-associating objects with new nodes may also involve additional tree management tasks. For instance, if an object moves from one node to another, the hierarchical tree structure might need to one or more of insert new nodes, remove empty ones, or collapse nodes, if required, in any combination. Efficiently managing dynamic updates may be crucial for the overall performance of the system, especially in scenarios with a large number of objects, high rates of change, or large spatial environments.

In a further implementation of the method according to the first aspect, each depth level in the hierarchical tree structure corresponds to a section in the sequence of the code. This relates to the structural organization of the hierarchical tree structure and how it correlates with the encoding of spatial information of objects, specifically mentioning that each depth level in the tree corresponds to a section in the sequence of the code. Each level of depth within the hierarchical tree structure may be directly related to a specific section of the code used to encode the spatial information of objects. This may represent a space-filling curve, that may convert multi-dimensional data into one-dimensional values while preserving spatial locality. The code may interleave one or more bits of the respective coordinates in respective sections, effectively combining the spatial dimensions into a single code, wherein sections of the code correlate with spatial subdivisions at the respective level. This correlation may imply that as the hierarchical tree structure is traversed, moving from the root to deeper levels, different sections of the code can be used to guide the traversal, identify subsequent child nodes, and determine an appropriate node for each object. At each depth level, a certain portion (section) of the code may be relevant. This portion may dictate which child node to traverse to next, reflecting the object's spatial position in increasingly finer detail. By aligning depth levels with sections of the code, the hierarchical tree structure may efficiently represent spatial relationships within the multi-dimensional space. This alignment allows for quick and accurate spatial querying, such as finding objects in a given area or nearest neighbor searches. The encoding and individual codes provide a way to maintain spatial locality, which may be crucial for operations like simulation, rendering and collision detection, for example. The spatial codes allow for a compact representation of spatial information and can be efficiently processed by computer systems, enhancing the overall performance of the tree structure. The spatial codes can also be used by low-level instructions to efficiently access subsequent (child) nodes in the respective node arrays.

In a further implementation of the method according to the first aspect, the multi-dimensional space is a three-dimensional space, and each depth level of the hierarchical tree structure corresponds to two successive octree subdivisions of the multi-dimensional space. An octree is a tree structure where each node has eight child nodes (or subdivisions), commonly used for partitioning a three-dimensional space. The cell of the three-dimensional space represented by the parent node may be subdivided in two steps. The step may correspond to eight subdivisions of an octree, and the second step may correspond to a further octree subdivision of each of these, resulting in 64 subdivisions (or sub-cells) of the cell of the parent node in total. Hence, each subdivision may be represented by 6 bits.

Preferably, each depth level is associated with a 6 bit section of the code.

Accordingly, the position of objects within this space may be encoded as a sequence of sections including 6 bits. For coordinate *x* = *x*₀*x*₁ ... *xₙ, y = y*₀*y*₁ ... *yₙ*, and *z* = *z*₀*z*₁ ... *zₙ* with *xᵢ, yᵢ,* and *zᵢ* representing individual bits of coordinates x, y, and z, the sections of the code *S* = *s*₀, *s*₁, *..., sₘ* may be encoded as *s*₀ = *x*₀*y₀z₀x*₁*y*₁*z*₁*, s*₁ = *x*₂*y*₂*z*₂*x*₃*y*₃*z*₃*,* and so on. An alternative encoding may be *s*₀ = *x*₀*x*₁*y*₀*y*₁*z*₀*z*₁*, s*₁ = *x*₂*x*₃*y*₂*y*₃*z*₂*z*₃*.* This sequence may represent a dual subdivision at each dept level of the hierarchical tree structure, which can be efficiently represented at bit level, particularly, by using a 64 bit integer number, such as int64 or uint64 data types. This enables a compact and efficient representation of the spatial location within the tree by utilizing existing data structures that may be efficiently encoded on respective platforms. In particular, the dual subdivision at each level of the hierarchical tree structure offers a fine-grained approach to organizing space, facilitating accurate spatial queries and efficient data management. The approach is particularly suited for scenarios requiring detailed spatial resolution and efficient processing of 3D spatial data in environments with very large scales that require a fine resolution. For example, an environment spanning approx. 2 · 10¹² meters can be subdivided into 2 meters cells with a hierarchical tree structure at 20 levels. This can be encoded using 16 bytes or two int64 or uint64 numbers. However, it is to be understood that using a particular encoding, a particular number of bits and data types represents one example of an advantageous spatial encoding and structure of the hierarchical tree structure. Other embodiments are encompassed by the present disclosure.

In a further implementation of the method according to the first aspect, each element in an array is identifiable by a bit-mask-based identifier. The array may refer to the node array and the elements may refer to the stored child nodes. However, the array may also refer to the object array and the elements may refer to the stored objects. For example, each child node stored in the node arrays of the tree's nodes may have a unique identifier. A bit mask is a binary sequence where specific bits are set to 1 or 0 to represent certain information, where 1 can indicate that the element is present in the array and 0 can indicate that an element is absent in the array (or vice versa). Preferably, an individual element can be identified by a bit mask that includes one bit set to 1 and the other bits set to 0 (or vice versa). Having 64 subdivisions, each represented by a child node, a uint64 or int64 data structure can be used as a bit mask indicating presence of the child nodes. Hence, each array can have a bit mask representing the elements in the array. Checking whether an element is present in the array may be done by shifting 1 to the desired position, which may be defined by the object identification (object ID or objectID), and performing an AND operation with the bit mask (or bit mask). This may be represented in an example code as (bitmask & (1ULL << objectID)) != 0. When traversing the hierarchical tree structure or performing operations like insertion, deletion, or querying, the bit mask may be used to quickly determine which paths to follow, which child nodes are present, or which objects are relevant, significantly speeding up these operations. Preferably, using bit masks can also be applied for the object arrays. This approach is highly efficient for representing and quickly accessing a pre-defined number of elements (up to the number of bits in the chosen integer type, such as 64 elements using the int64 or uint64 data types). It is particularly useful in scenarios where performance and memory efficiency are critical, such as in spatial data structures used in physics simulations, 3D rendering or game development. A primary advantage of using bit-mask-based identifiers may be the speed of access and verification of objects. When an operation needs to locate, verify, or manipulate an object within arrays, the bit-mask-based identifier facilitates a quick and direct way to do so. Bit masks are a compact way of storing information, which can be advantageous in terms of memory efficiency. Storing a small bit mask for each object as an identifier consumes less memory than larger, more complex identification schemes. Moreover, bit-wise operations (like AND, OR, XOR) are typically faster than arithmetic or string operations in most computing architectures, leading to performance benefits in processing the bit-mask-based identifiers.

In a further implementation of the method according to the first aspect, the method further comprises using the hierarchical tree structure for 3D rendering, game development or geographic information systems (GIS). In the context of 3D rendering, embodiments of the present disclosure can be used to optimize the process of determining which objects should be processed or rendered based on a current perspective or field of interest. This may involve culling techniques like view frustum culling (excluding objects outside the camera's view), occlusion culling (excluding objects blocked by others), and level-of-detail management (rendering objects with varying detail based on distance from the viewer), to name a few. The ability of the hierarchical tree structure to efficiently organize and query spatial data makes it suitable for real-time rendering in applications like video games, simulations, and virtual reality, where performance and visual fidelity are crucial.

Similarly, in game development, spatial data structures are essential for various aspects, including rendering, collision detection, and scene management. Embodiments of the present disclosure can be utilized to efficiently manage the spatial aspects of a game's environment, helping to quickly determine which objects interact with each other or are relevant at any given moment. The present disclosure enables an efficient handling of spatial queries and dynamic updates, which makes it suitable for the constantly changing environments typical in games.

For GIS, as another example of an application area, embodiments of the present disclosure can be instrumental in managing complex spatial data, such as terrain models, urban infrastructure, and environmental features. The hierarchical tree structure allows for efficient storage and querying of large-scale geographic or environmental data. The hierarchical tree structure can support various GIS operations like spatial querying (e.g., finding all features within a certain area), spatial analysis (e.g., proximity and overlay analysis), and efficient map rendering, to name some.

A second aspect of the invention refers to a computer-readable storage medium storing program code, the program code comprising instructions that when executed by at least one processor carry out the method of the first aspect or one of the implementations of the first aspect. In particular, the at least one processor can be configured to provide, in a memory, a hierarchical tree structure with a root node and a plurality of nodes on a plurality of depth levels, wherein a node represents a cell of a spatial subdivision of the multi-dimensional space, encode coordinates of an object in a multi-dimensional space into a code, the code including a sequence of successive sections, each section including interleaved one or more successive bits of the coordinates from each dimension of the multi-dimensional space, associate the object with a node of the plurality of nodes based on the code, wherein objects located within a cell of the spatial subdivision share a common node at a corresponding depth level in the hierarchical tree structure, and store the object in an object array of the associated node in the memory.

It is to be understood that implementations of the second aspect may configure the at least one processor according to implementations of the first aspect, in any combination.

A third aspect of the invention refers to a device, comprising memory and a processor configured to perform the method of the first aspect or one of the implementations of the first aspect. In particular, the device can be configured to provide, in a memory, a hierarchical tree structure with a root node and a plurality of nodes on a plurality of depth levels, wherein a node represents a cell of a spatial subdivision of the multi-dimensional space, encode coordinates of an object in a multi-dimensional space into a code, the code including a sequence of successive sections, each section including interleaved one or more successive bits of the coordinates from each dimension of the multi-dimensional space, associate the object with a node of the plurality of nodes based on the code, wherein objects located within a cell of the spatial subdivision share a common node at a corresponding depth level in the hierarchical tree structure, and store the object in an object array of the associated node in the memory.

In a further implementation of the device according to the third aspect, the device is further configured to perform culling on nodes of the hierarchical tree structure using a culling check during traversal of the hierarchical tree structure, and to query objects associated with nodes that passed the culling check.

In a further implementation of the device according to the third aspect, the device is further configured to process a scene in the multi-dimensional space, by determining a view frustum, traversing the hierarchical tree structure to identify nodes that intersect with the view frustum, and processing objects associated with the identified nodes.

In a further implementation of the device according to the third aspect, the device is further configured to use the hierarchical tree structure to determine a level of detail for objects in the respective nodes of the hierarchical tree structure based on a spatial relationship to a viewer.

In a further implementation of the device according to the third aspect, the device is further configured to determine an occlusion level of objects by traversing the hierarchical tree structure, and processing the objects according to the occlusion level.

In a further implementation of the device according to the third aspect, each node stores references to child nodes in a node array in the memory and references to objects in the object array in the memory.

In a further implementation of the device according to the third aspect, the device is further configured to optimize the hierarchical tree structure, including, for each node, determining a number of objects associated with the respective node, and removing nodes without associated objects.

In a further implementation of the device according to the third aspect, the device is further configured to collapse nodes with a single child node.

In a further implementation of the device according to the third aspect, wherein to associate the object with a node of the plurality of nodes, the device is configured to traverse the hierarchical tree structure starting with the root node to identify the node associated with the object based on the code.

In a further implementation of the device according to the third aspect, the device is further configured to check, for each node, child nodes of the respective node according to a section of the code corresponding to the depth level of the child nodes to identify a node associated with the object based on the code.

In a further implementation of the device according to the third aspect, the device is further configured to, if the node array of the respective node does not include a child node at a position corresponding to the section of the code, insert a new node in the node array.

In a further implementation of the device according to the third aspect, the device is further configured to add a further object into the hierarchical tree structure, including encoding coordinates of the further object to create a further code, associate the further object with a node of the plurality of nodes based on the further code, and store the further object in an object array of the associated further node in the memory.

In a further implementation of the device according to the third aspect, the device is further configured to delete an object from an object array of an associated node, and de-associate the object with the associated node.

In a further implementation of the device according to the third aspect, the device is further configured to receive an update of properties of an object stored in an object array of a node of the hierarchical tree structure, and based on the updated properties, dynamically associate the object with another node of the hierarchical tree structure.

In a further implementation of the device according to the third aspect, each depth level in the hierarchical tree structure corresponds to a section in the sequence of the code.

In a further implementation of the device according to the third aspect, the multi-dimensional space is a three-dimensional space, and each depth level of the hierarchical tree structure corresponds to two successive octree subdivisions of the multi-dimensional space.

In a further implementation of the device according to the third aspect, each depth level is associated with a 6 bit section of the code.

In a further implementation of the device according to the third aspect, each element in an array is identifiable by a bit-mask-based identifier.

In a further implementation of the device according to the third aspect, the device is further configured to use the hierarchical tree structure for 3D rendering, game development or geographic information systems.

A fourth aspect of the invention refers to a system, comprising one or more server devices, configured to maintain a plurality of objects, each object having a coordinates in a multi-dimensional space, a network interconnecting the one or more server devices, and at least one terminal device, configured to access the one or more server devices.

At least one of the servers can be a device according to the third aspect or one of the implementations of the third aspect. Additionally or as an alternative, the one or more server devices can be configured to perform the method of the first aspect or one of the implementations of the first aspect.

In particular, the one or more server devices can be configured to provide or maintain, in a memory, which may be a memory accessible by the one or more server devices, a hierarchical tree structure with a root node and a plurality of nodes on a plurality of depth levels, wherein a node represents a cell of a spatial subdivision of the multi-dimensional space.

At least one of the one or more server devices can be configured to encode coordinates of an object of the plurality of objects in the multi-dimensional space into a code, the code including a sequence of successive sections, each section including interleaved one or more successive bits of the coordinates from each dimension of the multi-dimensional space, to associate the object with a node of the plurality of nodes based on the code, wherein objects located within a cell of the spatial subdivision share a common node at a corresponding depth level in the hierarchical tree structure, and to store the object in an object array of the associated node in the memory.

Preferably, after storage, the object can be accessible via the hierarchical tree structure by the one or more server devices. Additionally or as an alternative, the terminal device can be configured to query or access, via the one or more server devices, at least one of the plurality of objects, such as the stored object.

It is to be understood that embodiments according to the third and fourth aspect may include logic, processor(s), or functional device(s), which may be configured according to features of an embodiment of the first aspect of the disclosure or any implementations of the first aspect, in any combination. Preferably, the device or one of the server devices of the system may be configured according to embodiments of the first aspect, in any combination. Likewise, the method according to embodiments of the first aspect may include processing steps reflecting a function of the structural features of the device or the system, in any combination.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- Fig. 1: is a flow chart of a method in accordance with an embodiment of the present invention,
- Fig. 2: is a schematic illustration of a subdivision of a multi-dimensional space in accordance with a further embodiment of the present invention,
- Fig. 3: is a diagram showing objects in the multi-dimensional space to be managed by an embodiment of the present invention,
- Fig. 4: is a schematic illustration of subdivisions of a multi-dimensional space managed by a hierarchical tree structure in accordance with a further embodiment of the present invention,
- Fig. 5: is a schematic illustration of data structures used to access an array in accordance with a further embodiment of the present invention,
- Fig. 6: is a diagram of a spatial code in accordance with a further embodiment of the present invention, and
- Fig. 7: is a schematic illustration of a system in accordance with a further embodiment of the present invention.

### DETAILED DESCRIPTION OF EMBODIMENTS

In the following description, reference is made to drawings which show by way of illustration various embodiments. Also, various embodiments will be described below by referring to several examples. It is to be understood that the embodiments may include changes in design and structure without departing from the scope of the claimed subject matter.

The techniques described herein may be implemented in various computing systems, examples of which are described in greater detail below. Such systems generally involve the use of suitably-configured computing devices implementing a number of modules, each providing one or more operations needed to complete execution of such techniques. Each module may be implemented in its own way; all need not be implemented the same way. As used herein, a module may be a structural component of a system which performs an operational role, which may be a portion of or an entire software element (e.g., a function of a process, a discrete process, or any other suitable embodiment). A module may comprise computer-executable instructions and may be encoded on a computer storage medium. Modules may be executed in parallel or serially, as appropriate, and may pass information between one another using a shared memory on the computer on which they are executing, using a message passing protocol or in any other suitable way. Exemplary modules are described below carrying out one or more tasks, though it should be appreciated that the modules and division of tasks described may be merely illustrative of the type of modules that may implement the exemplary techniques described herein, and that the invention is not limited to being implemented in any specific number, division, or type of modules. In some implementations, all functionalities may be implemented in a single module. Further, the modules may be discussed below as all executing on a single computing device for clarity, though it should be appreciated that, in some implementations, the modules may be implemented on separate computing devices adapted to communicate with one another.

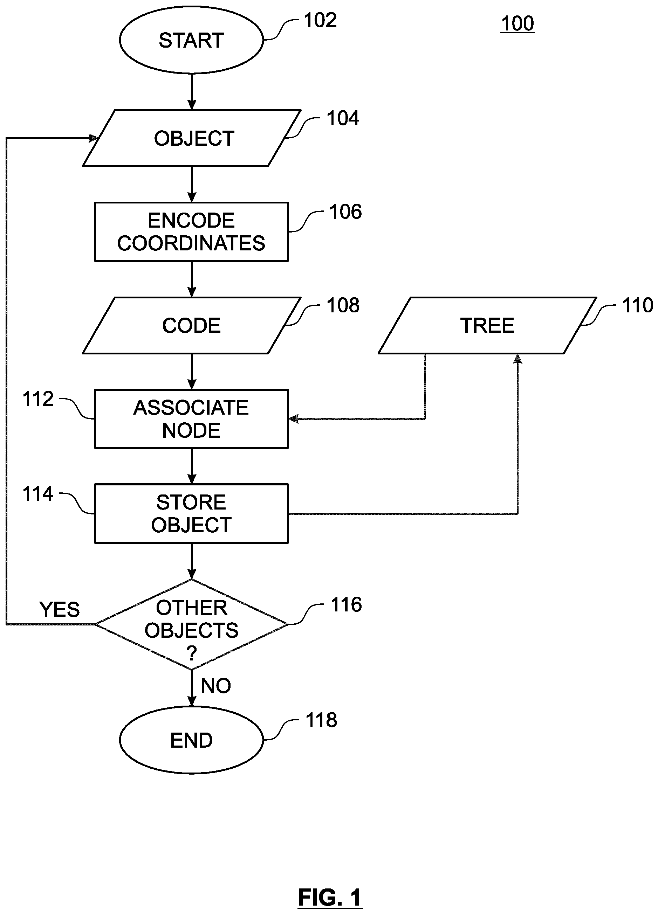

Fig. 1 is a flow chart of a method in accordance with an embodiment of the present invention. The method 100 may be a computer-implemented method for spatial management of objects.

The method 100 may start in item 102 and proceed with accessing spatial characteristics of an object 104. The spatial characteristics may include coordinates of the object 104 in a multi-dimensional space.

In item 106, the method 100 may encode the coordinates of the object 104 into a code 108. The code 108 may include a sequence of successive sections, each section including interleaved one or more successive bits of the coordinates of the object 104 from each dimension of the multi-dimensional space. For example, in 3D space, the coordinates of the object 104 may be defined as *x* = *x*₀*x*₁ ... *xₙ, y = y*₀*y*₁ ... *yₙ*, and *z* = *z*₀*z*₁ ... *zₙ* with *xᵢ, yᵢ,* and *zᵢ* representing the bits of coordinates x, y, and z. The code 108 may be composed of the successive sections *s*₀*, s*₁*,* ..., *sₘ,* which may be encoded in item 106 as *s*₀ = *x*₀*y*₀*z*₀*x*₁*y*₁*z*₁*, s*₁ = *x*₂*y*₂*z*₂*x*₃*y*₃*z*₃*,* and so on. As an alternative, the sections may be encoded as *s*₀ = *x*₀*x*₁*y*₀*y*₁*z*₀*z*₁*_{,} s*₁ *= x*₂*x*₃*y*₂*y*₃*z*₂*z*₃*.* The number of successive bits of each coordinate may be controlled by a pre-set value, such as 1 for the first example, and 2 for the second example. Any other suitable number can be chosen. However, it is to be understood that this code is an example only and that other coordinates, other sections and other encoding can be used to determine the code 108.

Step 106 may be performed by an encoder, which may be implemented as hardware or software or a combination thereof. For example, the encoder can be implemented in hardware or in software or as a combination of hardware and software on dedicated circuitry or on general purpose circuitry, such as an accelerator, a GPU, or a CPU.

The method 100 may further maintain a hierarchical tree structure 110 in memory. The hierarchical tree structure 110 may have a root node and a plurality of nodes on a plurality of depth levels. Each node may represent a cell of a spatial subdivision of the multi-dimensional space.

The method 100 may proceed in item 112 with associating the object 104 with a node of the hierarchical tree structure 110 based on the code 108. Objects located within a cell of the spatial subdivision share a common node at a corresponding depth level in the hierarchical tree structure 110. The common node may be the node (or a parent thereof) associated with the cell encompassing the objects. Item 112 may include a traversal of the hierarchical tree structure 110 starting with the root node to identify a target node for the object 104 using the code 108. In particular, for each node, the method may check child nodes of the respective node according to a section of the code 108 corresponding to the depth level of the child nodes. The method 100 may choose the child node according to the section and proceed with further child nodes of the child node until a leaf node corresponding to the spatial characteristics of the object 104 is found. Additionally or as an alternative, a child node reflecting a subdivision accommodating the object 104 can be created if there is no suitable child node for the object 104.

In item 114, the object (or a reference to the object) can be stored in an object array of the associated node as determined in item 112.

The method 100 may verify in item 116 whether further objects are to be processed. If this is the case, the method 100 may re-iterate with item 104. If no further objects are to be processed. The method 100 may end in item 118.

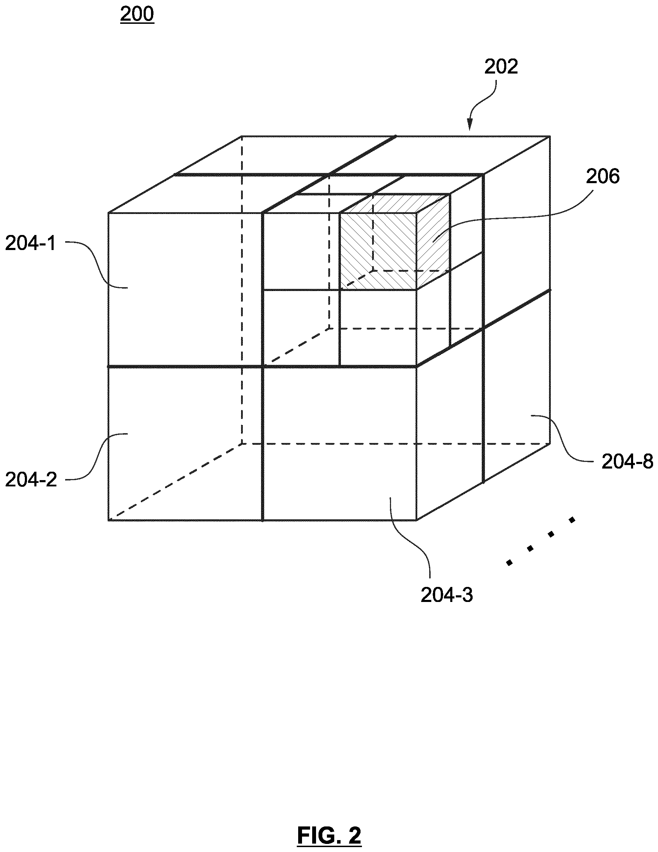

Fig. 2 is a schematic illustration of a subdivision of a multi-dimensional space in accordance with a further embodiment of the present invention. The multi-dimensional space 200 may have, for example, three dimensions. However, it is to be understood that any other number of dimensions is encompassed by the present disclosure. This may include, for example, two-dimensional space, four-dimensional space, five-dimensional space, six-dimensional space, or more.

The subdivisions may follow any suitable technique for dividing the multi-dimensional space 200. This may include, preferably, a regular pattern. However, any other irregular pattern could be used, which may be based, for example, on a density of objects or information in the multi-dimensional space 200, or based on simulation grids already defined in the multi-dimensional space 200.

As shown in Fig. 2, the multi-dimensional space 200 may be subdivided using an octree subdivision. The term "octree" derives from the fact that each node in the hierarchy has up to eight children, wherein each child represents a subdivision. The space represented by the node can be represented as a cube 202, which can be subdivided into smaller subcubes 204-1, ..., 204-8, each represented by one of the children. Each of the subcubes 204 can be thought of as an octant of the cube 202, occupying one corner. The subdivision is such that each subcube 204 has half the length, width, and height of the parent cube.

One drawback of octrees is that the number of child nodes does not well map on available data structures. Accordingly, Fig. 2 shows a subdivision of the multi-dimensional space 200, wherein each level of subdivision corresponds to two successive octree subdivisions of the multi-dimensional space 200. The cube 202 of the three-dimensional space represented by the parent node may be subdivided in two steps. The first step may correspond to an octree subdivision and may result in eight subdivisions or subcubes 204. The second step may correspond to a further octree subdivision 206 of each subcube 204.

This may result in 64 subdivisions 206 of the cell of the parent node in total. Each subdivision 206 may represent a (sub) cell of the multi-dimensional space 200. The subdivisions may be represented by a hierarchical structure, such as a tree, where each node may have up to 64 child nodes.

Having 64 subdivisions is advantageous since the subdivisions 206 can be accessed using arrays and bit masks that fully occupy common 64 bit data formats, such as uint64 or int64 integer format. Furthermore, lookups and other operations on arrays can be efficiently implemented, for example, using pop_count instructions on modern CPUs, which can count the number of set bits in a 64 bit value, for example.

This is illustrated by the following code example.

```
 std::vector<T> arrObjects;     // can hold between 0 and 64 objects, where every
                                // object can be identified by a value between 0 and 63
 uint64 nMask;                 // A bit mask, where a single bit represents
                               // which objects are present in arrObjects.
```

Objects in the array may be, for example, the subdivisions 206. In a hierarchical representation of the subdivisions 206, for example, by a tree, each node may store the child nodes in a corresponding array. To determine, whether a node in the tree has a respective child node, presence of the child nodes in the array may be checked. Checking if an object is inside the array arrObjects may be implemented as a trivial bit operation ((nMask & (1<<objectID)) != 0). If this condition is true, then the object is in the array.

Furthermore, objects in the array (corresponding to child nodes) can be retrieved without a search. This is illustrated by the following example code.

```
 index = pop_count (nMask & ((1<<objectID) - 1))
                             // first remove all bits of objects with a larger
                             // index than our object, then count the set bits.
 T = arrObjects[index]      // afterwards, directly access the object
```

Further to efficient access to the array, each subdivision 206 may be addressed by 6 bits. Hence, each subdivision 206 can be advantageously addressed using 6 bit sections of a spatial code, such as the code 108 as discussed above with regard to Fig. 1.

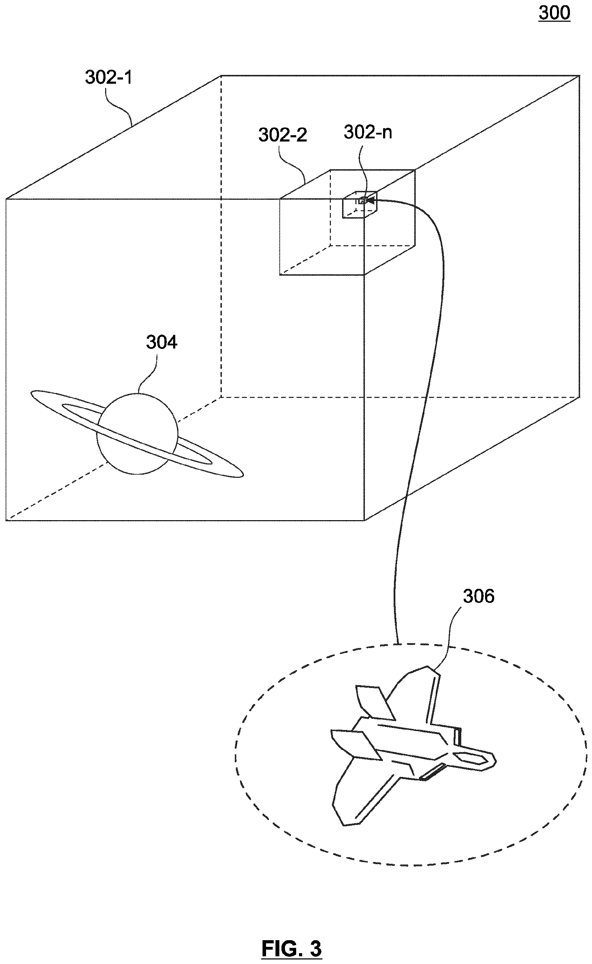

The subdivisions 206 according to the present disclosure may further rapidly subdivide a very large space using multiple levels in order to generate subdivisions with a desired precision. This is illustrated in Fig. 3, which shows a diagram showing objects in a multi-dimensional space 300 to be managed by an embodiment of the present disclosure. The multi-dimensional space 300 may correspond to the multi-dimensional space 200 of Fig. 2 and may be managed in the same or a similar way. In particular, the multi-dimensional space 300 may be structured using two successive octree subdivisions on each level of subdivision. Hence, a first level 302-1 may have subdivisions 302-2 and the multi-dimensional space 300 may be subdivided up to a level n with subdivisions 302-n, to manage objects within the multi-dimensional space 300. It is to be understood that even though only one upper-right-front subdivision 302 is shown, each level 302 may include 64 subdivisions. The upper-right-front subdivision is shown for illustrative purposes only. For example, the cube 302-1 may include 64 subdivisions of the size of subdivision 302-2.

For example, to be able to support the whole double value range with millimeter precision (and having meters as whole numbers before the point), a range of [-1 099 511 627 776.0 ; +1 099 511 627 776.0] meters is to be considered. This range can be normalized to [0.0 ; +2 199 023 255 552.0] meters. In three dimensions and having a spatial code encoded with 6 bits, the space can be reduced to millimeter precision in 20 subdivision steps:

| // | Level | Size(m) | Bits (to address the next sub level) | |
|---|---|---|---|---|
| // | 0 | 2,199,023,255,552 | 0: 5 | |
| // | 1 | 549,755,813,888 | 6: 11 | |
| // | 2 | 137,438,953,472 | 12: 17 | |
| // | 3 | 34,359,738,368 | 18: 23 | |
| // | 4 | 8,589,934,592 | 24: 29 | |
| // | 5 | 2,147,483,648 | 30: 35 | |
| // | 6 | 536,870,912 | 36: 41 | |
| // | 7 | 134,217,728 | 42: 47 | |
| // | 8 | 33,554,432 | 48: 53 | |
| // | 9 | 8,388,608 | 54: 59 | // NOTE: split into next uint64 |
| // | 10 | 2,097,152 | 64: 69 | |
| // | 11 | 524,288 | 70: 75 | |
| // | 12 | 131,072 | 76: 81 | |
| // | 13 | 32,768 | 82: 87 | |
| // | 14 | 8,192 | 88: 93 | |
| // | 15 | 2,048 | 94: 99 | |
| // | 16 | 512 | 100:105 | |
| // | 17 | 128 | 106:111 | |
| // | 18 | 32 | 112:117 | |
| // | 19 | 8 | 118:123 | |
| // | 20 | 2 | | // No children, last tree level |

Each level may take 6 bits. Hence, a 2 meter resolution can be encoded in 20 levels, which can be encoded using 16 bytes.

The free bits, i.e., bits 60 to 63 in a first uint64 and bits 124 to 127 in the second uint64 may be used to encode, for example, further spatial characteristics, such as a radius of an object. This can be advantageously used to handle objects which are larger than a sub-division level, as an example.

Fig. 3 may show the subdivision 302-1 on level 6 or similar, which may accommodate, for example, planets 304 or other very large objects spanning thousands of kilometers, while subdivisions on level 17, such as 302-n, for example, can be used to accommodate objects spanning less than a hundred of meters, such as a spaceship 306 or any other suitable object of similar size. It is to be understood that even though a planet 304 and a spaceship 306 are shown, the present disclosure is not limited to a particular kind of objects. Any kind of objects on multiple scales can be managed and handled using the present disclosure.

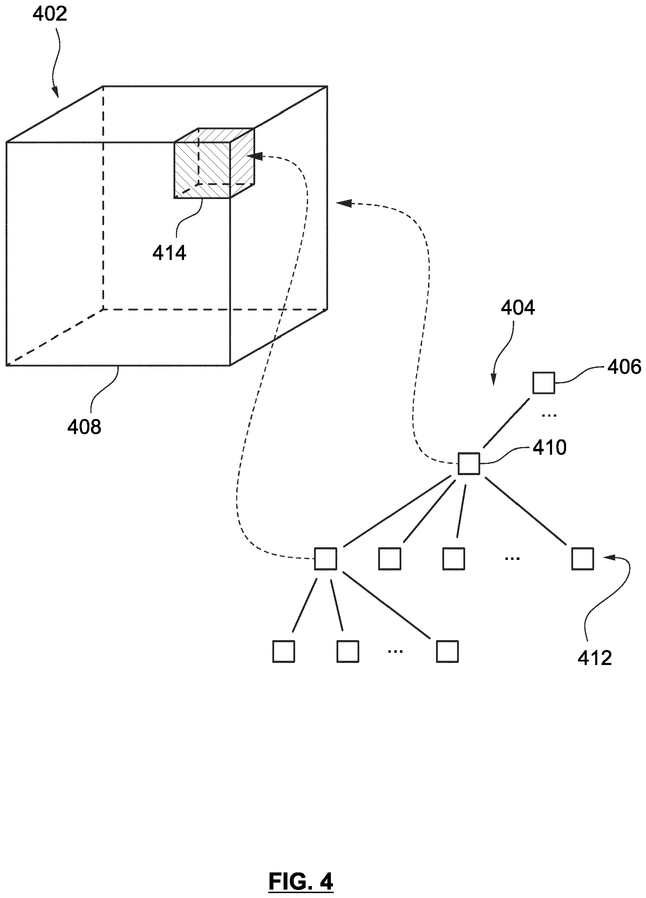

Fig. 4 is a schematic illustration of subdivisions of a multi-dimensional space managed by a hierarchical tree structure in accordance with a further embodiment of the present invention. As discussed with regard to Figs. 1 to 3, objects in multi-dimensional space 402 (which may be similar to multi-dimensional space 200, 300) can be managed using a tree 404, such as the hierarchical tree structure 110 in Fig. 1. Each subdivision level, such as the levels 302-i as discussed with regard to Fig. 3, can be mapped on a node of the tree 404.

The multi-dimensional space 402 may be managed in the same or a similar manner as multi-dimensional space 200 and 300. In particular, the multi-dimensional space 402 may be structured using two successive octree subdivisions on each level.

The first level may be associated with a root node 406 of the tree 404. Cube 408 (or cell of a subdivision of the previous level) may be mapped on a node 410 of the tree 404. The node 412 may have at least one child 412, which may be mapped on each subdivision 414 of cube 408. Using two successive octree subdivisions results in a maximum of 64 child nodes 412 per node 410. This can be advantageously managed using an array and 64 bit integer data types (representing respective bit masks and indices) to indicate presence of children 412 of a node 410 and to access the arrays without search, as discussed above with regard to Fig. 2.

To access or query objects in the multi-dimensional space, the coordinates of the objects can be encoded into a spatial code and inserted into an object array of a suitable (associated) node 410 in the tree 404. Thus, the objects can be efficiently accessed and queried by traversing the tree 404. This can be useful in various application areas with large amounts of objects on different scales, and potentially large empty areas (sparse distribution of objects). This can be frequently found in, for example, 3D rendering, game development or geographic information systems.

The tree 404 can be used for one or more of culling purposes, determining of relevant areas, such as using view frustum determination, level of detail determinations or determination of occlusion levels, and the like, in any combination, as an example.

The tree 404 can apply efficient management techniques, such as collapsing nodes with one child only, deleting empty nodes, balancing of the tree, and the like, in any combination. In particular, optimization may include skipping nodes if they only have a single child node, as in this case the child node can be directly checked, and/or keep objects in leaf nodes until a certain object threshold is reached to balance cache locality vs. spatial distribution. Other approaches for optimization are also encompassed by the present disclosure.

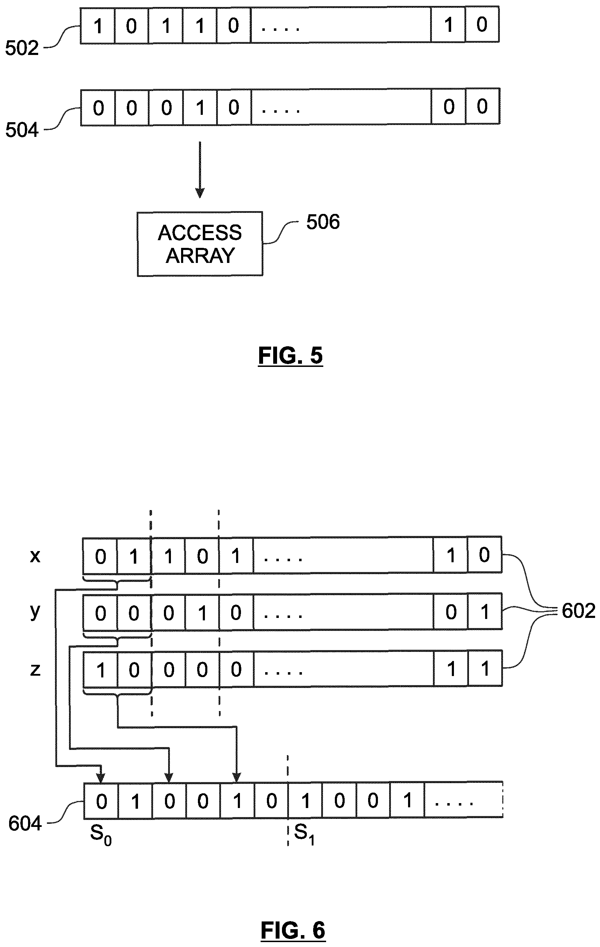

As discussed above, one advantage of the tree 404, which manages for each node 410 up to 64 children 412, may be a quick determination of presence of child nodes 412 of the node 410 using common data types. This can be done by maintaining a bit mask 502, as shown in Fig. 5, which may be a 64 bit integer number and which may indicate at each position the availability, presence or existence of a child node in the array. A "1" may indicate presence of the child node. A "0" may indicate absence of the child node in the array. For example, as shown in bit mask 502, the left-most child node may be present and the next child node may be absent. Shifting the value of 1 to the left (or right, according to platform, architecture or design) by the ID of the respective child node, which may be in the range of 0 ... 63, which may be, for example, achieved by the operation 1<<nodeID, may result in the value 504. A bit-wise AND operation either results in the value of 0 if the child node is not present, or in another value > 0 if the child node is present. Accordingly, the condition ((bitmask & (1<<nodeID)) != 0) may be used to directly and efficiently determine presence of a child node. If the condition is true, the array can be accessed in item 506, for example, using the technique as discussed with regard to Fig. 2 above.

Fig. 6 is a diagram of a spatial code in accordance with a further embodiment of the present invention. The spatial code can be used to encode coordinates in multiple dimensions into a single code. This can be used, for example, in item 106 of the method 100, as discussed in Fig. 1, to link objects, such as 304, 306, in a multi-dimensional space, such as 200, 300, 402, to a hierarchical tree structure, such as tree 110, 404, as discussed above.

An object in multi-dimensional space can have multiple coordinates 602. In three-dimensional space, for example, the coordinates can be x, y, and z coordinates, as depicted in Fig. 6. The x, y, and z coordinates of the object can be defined as *x* = *x*₀*x*₁ *... xₙ*, *y = y*₀*y*₁ *... yₙ,* and z = *z*₀*z*₁ ... *zₙ* with *xᵢ, yᵢ,* and *zᵢ* representing individual bits. As shown in Fig. 6 the x coordinate may start with 01101..., the y coordinate with 00010..., and the z coordinate with 10000....

The code can be constructed by interleaving one or more successive bits of each coordinate in each dimension. For example, two successive bits of the x, y, and z coordinate can be interleaved in the code 604, thereby forming a section *s*₀. The next two successive bits of the x, y, and z coordinate can be interleaved to form section *s*₁ of the code 604. In the example of Fig. 6 section *s*₀ may be composed of 01 from the x coordinate, 00 from the y coordinate, and 10 from the z coordinate, leading to section *s*₀ = 010010. The subsequent sections *s*₁, ..., *sₘ* of the code 604 may be formed accordingly, thus, *s*₀ = *x*₀*y*₀*z*₀*x*₁*y*₁*z*₁*, s*₁ = *x*₂*y*₂*z*₂*x*₃*y*₃*z*₃*,* and so on. As discussed in relation to other examples and embodiments, other encoding technique can be used, which may also define a number of successive bits from each dimension to form the respective section.

In 3D space, having code sections of the length of 6 bits is advantageous since each section can be directly mapped on a tree structure with up to 64 child nodes on each level, wherein each section (resulting in 2⁶ = 64 values) can serve as an ID to directly identify a child node. This also enables efficient processing using 64 bit data types. However, it is to be understood that code 604 is an example only and that other numbers of bits from each coordinate, such as 3, 4 or 5, or any other number of bits, preferably a power of 2, could be used to define individual sections of the code 604.

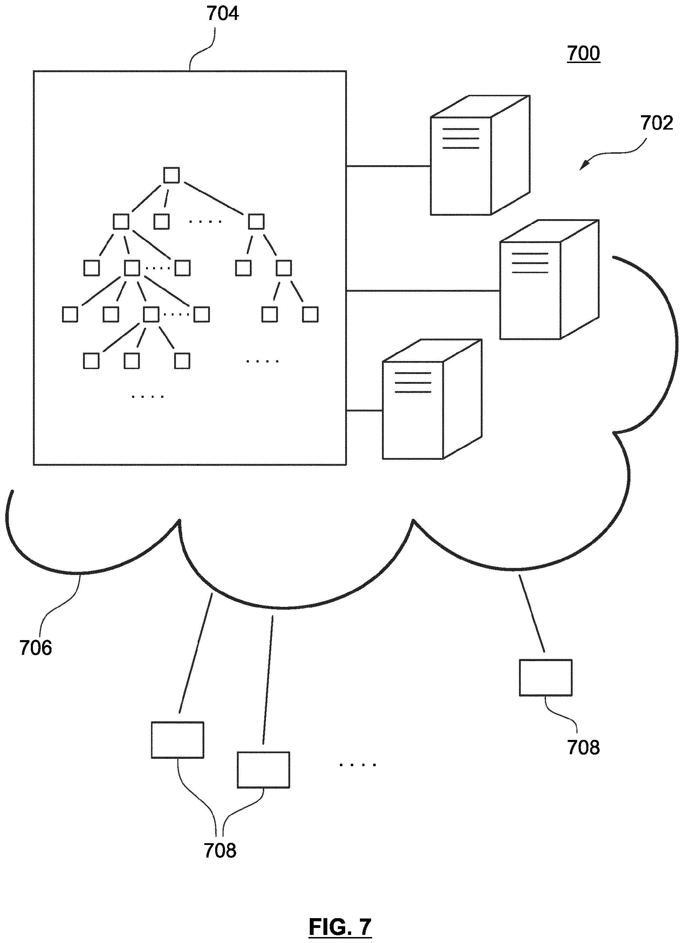

Fig. 7 is a schematic illustration of a system in accordance with a further embodiment of the present invention.

The system may include a plurality of server devices 702. The server devices 702 may maintain a plurality of objects in a multi-dimensional space using a hierarchical structure 704. The hierarchical structure 704 may correspond to the hierarchical tree structure 110 as discussed with regard to Fig. 1 or the tree 404 as discussed with regard to Fig. 4. The hierarchical structure 704 and respective objects can be maintained in a distributed manner, wherein each server device 702 may access, manipulate and/or process the hierarchical structure 704. There may also be limitations, restriction policies, or permissions, designating individual server devices 702 with individual permissions.

The server devices 702 may maintain the hierarchical structure 704 and manage the objects according to embodiments of the present disclosure, for example, using the method 100 of Fig. 1, or any other embodiment of the present disclosure.

The system 700 may further include a network 706 interconnecting the server devices 702, which is depicted as a cloud. It is to be understood that any type of networking technology or interconnections can be used to interconnect the server devices 702.

The system 700 may further include various terminal devices 708, which may access at least one of the server devices 702 via the network 706. The terminal devices 708 may be used to access, query, or otherwise interact with the objects represented by the hierarchical structure 704. For example, a terminal device 708 may receive information related to an object or a rendered representation of at least some of the objects.

In a preferred embodiment, the disclosure may encompass a processing device with a plurality of means that may be configured to perform functionality of embodiments of the present invention. In particular, the device may be configured for spatial management of objects and may comprise means for providing, in a memory, a hierarchical tree structure with a root node and a plurality of nodes on a plurality of depth levels, wherein a node represents a cell of a spatial subdivision of the multi-dimensional space; means for encoding coordinates of an object in a multi-dimensional space into a code, the code including a sequence of successive sections, each section including interleaved one or more successive bits of the coordinates from each dimension of the multi-dimensional space; means for associating the object with a node of the plurality of nodes based on the code, wherein objects located within a cell of the spatial subdivision share a common node at a corresponding depth level in the hierarchical tree structure; and means for storing the object in an object array of the associated node in the memory. Preferred embodiments of the device may include further means for implementing details of the first aspect and implementations thereof, and further embodiments as disclosed with regard to Fig. 1 to 7 and corresponding description, in any combination.

It is to be understood that the implementational details as provided in Fig. 1 to 7 represent preferred examples. Other implementations using different components, modules, blocks, units, circuitry, connections, and links can be used, and the present disclosure is not restricted by a particular implementation in silicon.

Embodiments of the present disclosure may be defined according to one or more of the following examples:
Example 1. A method for spatial management of objects, comprising: providing, in a memory, a hierarchical tree structure with a root node and a plurality of nodes on a plurality of depth levels, wherein a node represents a cell of a spatial subdivision of the multi-dimensional space; encoding, by an encoder, coordinates of an object in a multi-dimensional space into a code, the code including a sequence of successive sections, each section including interleaved one or more successive bits of the coordinates from each dimension of the multi-dimensional space; associating, by a processing unit, the object with a node of the plurality of nodes based on the code, wherein objects located within a cell of the spatial subdivision share a common node at a corresponding depth level in the hierarchical tree structure; and storing the object in an object array of the associated node in the memory.
Example 2. The method according to any one of the preceding examples, in particular, example 1, further comprising culling nodes of the hierarchical tree structure using a culling check during traversal of the hierarchical tree structure, and querying objects associated with nodes that passed the culling check.
Example 3. The method according to any one of the preceding examples, in particular, example 1 or 2, further comprising processing a scene in the multi-dimensional space, including determining a view frustum, traversing the hierarchical tree structure to identify nodes that intersect with the view frustum, and processing objects associated with the identified nodes.
Example 4. The method according to any one of the preceding examples, in particular, examples 1 to 3, the method further comprising using the hierarchical tree structure to determine a level of detail for objects in the respective nodes of the hierarchical tree structure based on a spatial relationship to a viewer.
Example 5. The method according to any one of the preceding examples, in particular, example 1 to 4, the method further comprising determining an occlusion level of objects by traversing the hierarchical tree structure, and processing the objects according to the occlusion level.
Example 6. The method according to any one of the preceding examples, in particular, examples 1 to 5, wherein each node stores references to child nodes in a node array in the memory and references to objects in the object array in the memory.
Example 7. The method according to any one of the preceding examples, in particular, examples 1 to 6, the method further comprising optimizing the hierarchical tree structure, including, for each node, determining a number of objects associated with the respective node, and removing nodes without associated objects.
Example 8. The method according to any one of the preceding examples, in particular, examples 1 to 7, the method further comprising collapsing nodes with a single child node.
Example 9. The method according to any one of the preceding examples, in particular, examples 1 to 8, wherein said associating the object with a node of the plurality of nodes includes traversing the hierarchical tree structure starting with the root node to identify the node associated with the object based on the code.
Example 10. The method according to any one of the preceding examples, in particular, examples 1 to 10, the method further comprising, for each node, checking child nodes of the respective node according to a section of the code corresponding to the depth level of the child nodes to identify a node associated with the object based on the code.
Example 11. The method according to any one of the preceding examples, in particular, example 10, the method further comprising if the node array of the respective node does not include a child node at a position corresponding to the section of the code, inserting a new node in the node array.
Example 12. The method according to any one of the preceding examples, in particular, examples 1 to 11, the method further comprising adding a further object into the hierarchical tree structure, including encoding coordinates of the further object to create a further code, associating the further object with a node of the plurality of nodes based on the further code, and storing the further object in an object array of the associated further node in the memory.
Example 13. The method according to any one of the preceding examples, in particular, examples 1 to 12, the method further comprising deleting an object from an object array of an associated node, and de-associating the object with the associated node.
Example 14. The method according to any one of the preceding examples, in particular, examples 1 to 13, the method further comprising receiving an update of properties of an object stored in an object array of a node of the hierarchical tree structure, and based on the updated properties, dynamically associating the object with another node of the hierarchical tree structure.
Example 15. The method according to any one of the preceding examples, in particular, examples 1 to 14, wherein each depth level in the hierarchical tree structure corresponds to a section in the sequence of the code.
Example 16. The method according to any one of the preceding examples, in particular, examples 1 to 15, wherein the multi-dimensional space is a three-dimensional space, and each depth level of the hierarchical tree structure corresponds to two successive octree subdivisions of the multi-dimensional space.
Example 17. The method according to any one of the preceding examples, in particular, example 16, wherein each depth level is associated with a 6 bit section of the code.
Example 18. The method according to any one of the preceding examples, in particular, examples 1 to 17, wherein each element in an array is identifiable by a bit-mask-based identifier.
Example 19. The method according to any one of the preceding examples, in particular, examples 1 to 18, the method further comprising using the hierarchical tree structure for 3D rendering, game development or geographic information systems.
Example 20. At least one computer-readable medium storing instructions thereon that, when executed by a computing device, configure the computing device to perform a method according to any one of the preceding examples, in particular examples 1 to 19.
Example 21. A device, comprising: a processor configured to perform a method according to any one of the preceding examples, in particular examples 1 to 19.
Example 22. A system, comprising one or more server devices, configured to maintain a plurality of objects, each object having a coordinates in a multi-dimensional space; a network interconnecting the one or more server devices; and at least one terminal device, configured to access the one or more server devices, wherein the one or more server devices are configured to perform the method according to any one of the preceding examples, in particular examples 1 to 19.

While some embodiments have been described in detail, it is to be understood that aspects of the disclosure can take many forms. In particular, the claimed subject matter may be practiced or implemented differently from the examples described, and the described features and characteristics may be practiced or implemented in any combination. The embodiments shown herein are intended to illustrate rather than to limit the invention as defined by the claims.

## Claims

1. A method for spatial management of objects, comprising:
providing, in a memory, a hierarchical tree structure with a root node and a plurality of nodes on a plurality of depth levels, wherein a node represents a cell of a spatial subdivision of the multi-dimensional space;
encoding, by an encoder, coordinates of an object in a multi-dimensional space into a code, the code including a sequence of successive sections, each section including interleaved one or more successive bits of the coordinates from each dimension of the multi-dimensional space;
associating, by a processing unit, the object with a node of the plurality of nodes based on the code, wherein objects located within a cell of the spatial subdivision share a common node at a corresponding depth level in the hierarchical tree structure; and
storing the object in an object array of the associated node in the memory.

2. The method of claim 1, further comprising culling nodes of the hierarchical tree structure using a culling check during traversal of the hierarchical tree structure, and querying objects associated with nodes that passed the culling check.

3. The method of claim 1 or 2, further comprising processing a scene in the multi-dimensional space, including determining a view frustum, traversing the hierarchical tree structure to identify nodes that intersect with the view frustum, and processing objects associated with the identified nodes.

4. The method according to any one of the preceding claims, the method further comprising using the hierarchical tree structure to determine a level of detail for objects in the respective nodes of the hierarchical tree structure based on a spatial relationship to a viewer.

5. The method according to any one of the preceding claims, the method further comprising determining an occlusion level of objects by traversing the hierarchical tree structure, and processing the objects according to the occlusion level.

6. The method according to any one of the preceding claims, the method further comprising optimizing the hierarchical tree structure, including one or more of, for each node, determining a number of objects associated with the respective node, and removing nodes without associated objects or collapsing nodes with a single child node.

7. The method according to any one of the preceding claims, wherein said associating the object with a node of the plurality of nodes includes traversing the hierarchical tree structure starting with the root node to identify the node associated with the object based on the code, and, for each node, checking child nodes of the respective node according to a section of the code corresponding to the depth level of the child nodes to identify a node associated with the object based on the code.

8. The method according to any one of the preceding claims, the method further comprising if the node array of the respective node does not include a child node at a position corresponding to the section of the code, inserting a new node in the node array.

9. The method according to any one of the preceding claims, the method further comprising adding a further object into the hierarchical tree structure, including encoding coordinates of the further object to create a further code, associating, by the processing unit, the further object with a node of the plurality of nodes based on the further code, and storing the further object in an object array of the associated further node in the memory.

10. The method according to any one of the preceding claims, the method further comprising deleting an object from an object array of an associated node, and de-associating the object with the associated node.

11. The method according to any one of the preceding claims, the method further comprising receiving an update of properties of an object stored in an object array of a node of the hierarchical tree structure, and based on the updated properties, dynamically associating the object with another node of the hierarchical tree structure.

12. The method according to any one of the preceding claims, wherein the multi-dimensional space is a three-dimensional space, and each depth level of the hierarchical tree structure corresponds to two successive octree subdivisions of the multi-dimensional space, wherein each depth level is associated with a 6 bit section of the code.

13. The method according to any one of the preceding claims, the method further comprising using the hierarchical tree structure for 3D rendering, game development or geographic information systems.

14. At least one computer-readable medium storing instructions thereon that, when executed by a computing device, configure the computing device to perform a method according to any one of the preceding claims.

15. A system, comprising
one or more server devices, configured to maintain a plurality of objects, each object having coordinates in a multi-dimensional space;
a network interconnecting the one or more server devices; and
at least one terminal device, configured to access the one or more server devices, wherein the one or more server devices are configured to perform the method according to any one of the claims 1 to 13.
